# EUROPEAN PATENT APPLICATION

(11) **EP 1 645 883 A2**
(43) Date of publication of application: **12.04.2006**
(21) Application number: 05013928.6
(22) Date of filing: 28.06.2005
(51) Int. Cl.: G01P 3/487

(54) **Encoder ring for sensors**

(30) Priority: 07.10.2004 BR 0404360
(71) Applicant: Sabo Industria e Comércio Ltda., Sao Paulo SP. CEP 05036-001 (BR)
(72) Inventor: Da Mota Pavan, Orlando, S. Paulo/SP (BR)
(74) Representative: Ferreira Magno, Fernando Antonio

(57) **Abstract**

This invention refers to a encoder ring for sensors, also known as the gear wheel, pertaining to the field of sensors, which has been developed to allow more possibilities of application, especially in the automotive industry, optimized functioning and other benefits in relation to the conventional rings, comprising a ring-like body (11) made of polymeric material or similar injected provided with load of ferromagnetic material, or body (11") made of polymeric material injected without load of ferromagnetic material and provided with a coating layer (17) of ferromagnetic material, or body (11") without load of ferromagnetic material and provided with a peripheral provided with sections with load (12"), sections without load (13") and optionally a larger section without load (14") of ferromagnetic material.

## Description

This invention refers to sensitizing ring for sensors, also known as the gear wheel, pertaining to the field of the sensors (electronic management) and which has been developed to allow more possibilities of application, especially automotive application, optimized functioning, and other benefits in relation to the conventional models available.

It is common to find in the market sensor sets (electronic management) destined to gather information of spin / position of an axle or of a wheel or of other spinning elements, consisting mainly of: a ring or similar solidarity mounted and around the axle or wheel or other spinning element, provided with two types of peripheral sections, one different to the other, intercalated and regularly distributed, such as, teeth and spaces between the teeth or windows and closed spaces between windows or cutout and closed spaces between the cutout; and by a sensor that is sensitized differently when with the presence of one or the other differentiated peripheral section of the ring, thus generating information related to the spin / position of the axle or wheel or similar, such sensor connected to an electronic mean for processing the information obtained.

A typical application of this type of sensor set is part of the Electronic Injection Systems of automotive vehicles, destined to gather information of the spin /position of the axle of cranks of the vehicle, which are processed in the processing center, to generate command to the actuators of the system.

The sensitizing ring in this application is normally made of metal and comprises a ring with teeth and spaces between these teeth, or a round surface with windows and closed spaces between the windows, or with a flange with axial section, in which are included cutouts and closed spaces between the cutouts regularly distributed. These tings are obtained through usual methods of metal processing, especially stamping.

The fact is that such usual method and other methods for obtaining these rings have limitations with regards to the production of tings with smaller diameters, such as diameters below 120 mm, for instance, for the geometry type sine external or continuous square.

In order to facilitate the stamping, in a possibility of execution, the teeth of the ring have round contours (sine). However, in the ideal configuration for the functioning, the teeth must have square contours. Therefore, this would create a doubt between producing a ring that facilitates the manufacture or that allow best performance when used, which is not desired.

Rings with cutout flanges are suitable, but they have the inconvenient of being relatively fragile in the handling process.

Thus, the objective of the invention object of this invention is to provide a sensitizing ring for sensors to be applied particularly in the automotive industry, which will overcome the problems above.

Another objective is to provide a ring that despite the fact of resolving the problems is not provided with construction or manufacture with levels of complexity that makes it uninteresting if compared to the currently used.

Another objective is to provide a ring with cost adequate to its application.

Therefore, considering the problems above, and in order to overcome such problems and also aiming to meet the objective listed, the sensitizing ring for sensors object of this invention has been devised, which mainly comprises an ring-like body made of polymeric material or similar injected with peripheral provided with two types of different sections, one in relation to the other, and provided with a ferromagnetic load or with ferromagnetic superficial treatment, or ring provided with peripheral sections that incorporate and that do not incorporate the ferromagnetic load.

This construction of the sensitizing ring resolves the problems above, since the technology of plastic injection or similar allows the obtainment of rings with small diameters, smaller than the smallest one obtained from the stamping of metals, thus expanding the field of application of the sensor.

The fact that the ring is obtained from injecting plastic, or similar process, allows a more efficient profile to the application, without the limitations observed in metallic rings and their methods of obtainment.

Furthermore, the ring in screen presents simple construction and manufacture process, and a better cost if compared to the usual rings, thus ensuring its applicability in relation to the others.

The attached drawings refer to the sensitizing ring for sensor object of this invention, where:
FIG. 1 represents, at merely illustrative and non-restrictively title, a possibility of realization and the indication of how the piece is installed and how it works; and
FIGS. 2 and 3, show other possibilities of realization of the ring.

According to the illustrations of the figures mentioned above, the sensitizing ring object of this invention is part of the system 1 destined to gather information of the spin /position of an axle or wheel or other spinning element 40 and comprises essentially: the sensitizing ring 10, solidarity mounted and around the spinning element 40; a sensor 20 that is sensitized by ring 10 when spinning and generates information of the spin / position of the spinning element 40; and a electronic mean 30 for processing the information and for generating command signal from the processing.

The sensitizing ring 10 comprises mainly: a ring-like body 11 with diameter appropriate to be solidarity mounted around the spinning element 40; and by first 12 and second 13 peripheral sections of the body, one different to the other, regularly intercalated and spaced one to the other, considering that due to the necessity of the application, said sensitizing ring 10 may be optionally implemented with a third section 14 different from the others; said sections preferably comprising teeth 12, gaps 13 between the teeth, and a gap between larger teeth 14, these preferably configured by the absence of one tooth.

In this invention, instead of being made of metal and obtained from stamping or other metal processing methods, as usually found, the sensitizing ring 10 is made of polymeric material or similar injected, provided with / incorporated of load of ferromagnetic material.

The teeth 12 and the gaps between the teeth 13 may have round profiles, waves, or profiles preferably substantially square.

The ring 10 may optionally have its body 11 provided with a metallic hardening mesh 15.

In order to avoid the "relaxation effect" of the polymeric material, the ring 10 may work in collaboration with a metallic insert 16, disposed between the ring and the axle or other spinning element 30, in which the ring is laying.

The ring 10 thus constructed substantially works similarly to the conventional rings, i.e., when a tooth 12 or a gap 13 is alternately disposed near the sensor 20, this sensor 20 will alternately generate different corresponding electric signals, which are sent and processed by the processing mean 30, which generates adequate command signals.

Within the basic layout described above, the sensitizing ring 10 object of this invention may present modifications related to materials, dimensions, constructive details and/or configuration, without escaping from the scope of protection requested.

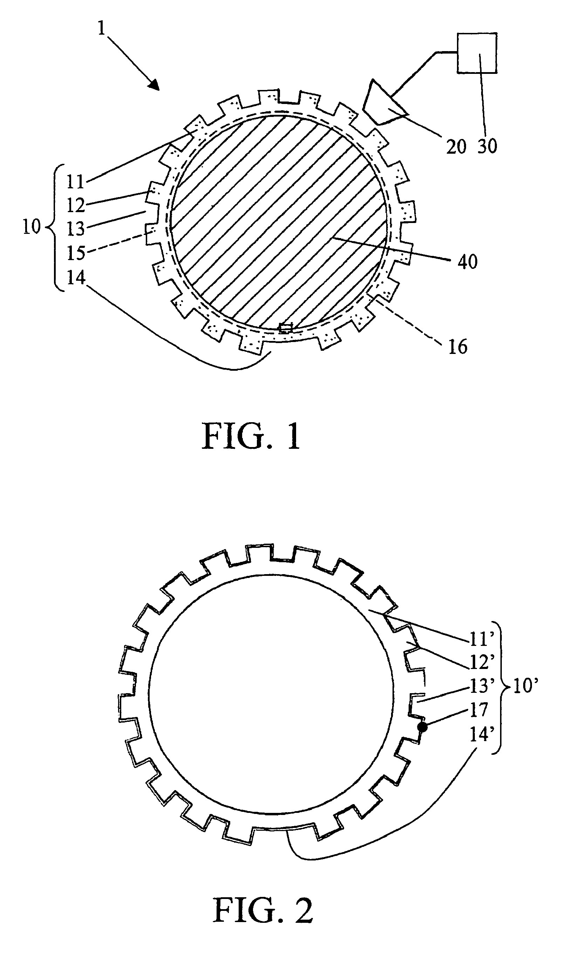

Therefore, (FIG. 2) the ring 10' is formed of a ring-like body 11' made of polymeric material injected or similar provided with teeth 12', gaps 13' and larger peripheral gap 14', without load of ferromagnetic material, instead of such load, said body 11' is provided with a coating layer of ferromagnetic material of type "meblização" 17.

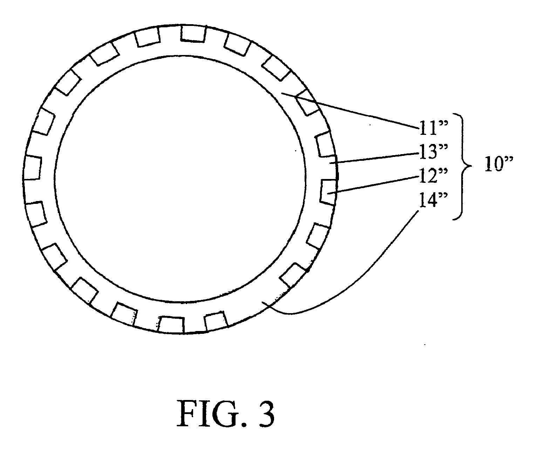

In another possibility of execution (FIG. 3), the ring 10" is formed of a ring-like body 11" made of polymeric material or similar injected without load of ferromagnetic material and with peripheral surface provided with sections 12" with load of ferromagnetic material and sections 13" without toad of ferromagnetic material, regularly intercalated and spaced, and a longer section 14" without load of ferromagnetic material formed by the absence of one section with load.

No matter what is the configuration of ring 10, it is provided with different diameters, in order to meet different needs. In a particular configuration of the ring 10, it has diameter smaller than 120 mm in order to meet applications not duly met by the metallic rings already mentioned above.

The ring 10 in screen, in any of the versions, is properly applied as a sensitizing ring for sensor used to generate information of the spin / position of a axle of cranks of an automotive vehicle or any other similar application in the automotive industry.

## Claims

1. Sensitizing ring for sensors mainly comprising a ring-like body (11); and, preferably teeth (12), gaps (13) between the teeth and, due to the necessity of the application, said ring can be implemented with a larger gap between the teeth (14), aiming to sensitize the sensor to generate electric signals to the respective electronic modules of management, **characterized by** the fact that the ring-like body (11) may be made of polymeric material or similar injected constituted of a mechanical structure with configuration as precisely projected associated to an ferromagnetic material constitutive of structure of interaction with the sensor.

2. Sensitizing ring for sensors according to claim 1, **characterized by** the body (11') is made of polymeric material or similar injected provided with coating layer of ferromagnetic material of type "meblização" (17).

3. Sensitizing ring for sensors according to claim 1, **characterized by** the body (11") is made of polymeric material or similar injected without load of ferromagnetic material and with peripheral surface provided with sections (12") with load of ferromagnetic material and sections (13") without load of ferromagnetic material, regularly intercalated and spaced.

4. Sensitizing ring for sensors according to claim 3, **characterized by** the fact that, depending on the application of the ring, it may have a larger section (14") without load of ferromagnetic material, intercalated between two sections (12") with load and formed by the absence of a section with load, in order to provide an alternative form to sensitize the sensor and generate electrical signals to the respective electronic management modules.

5. Sensitizing ring for sensors according to claim 1 or 2, **characterized by** the teeth (12), (12') and gaps between teeth (13), (13'), (14), (14') having profiles preferably substantially square, according to the project.

6. Sensitizing ring for sensors according to claim 1 or 2 or 3, **characterized by** the fact that, optionally, the body (11), (11'), (11") is provided with a nervure aiming a structural aspect (15) and working in collaboration with a metallic insert (16) provided between the ring and the axle or other spinning element (30), in which the ring is laying.
